# EUROPEAN PATENT APPLICATION

(11) **EP 3 309 466 A1**
(43) Date of publication of application: **18.04.2018**
(21) Application number: 16857179.2
(22) Date of filing: 26.08.2016
(51) Int. Cl.: F24F 1/00, H02K 5/16

(54) **INDOOR UNIT, AIR CONDITIONER PROVIDED WITH INDOOR UNIT, AND METHOD FOR ASSEMBLING INDOOR UNIT**

(30) Priority: 20.10.2015 JP 2015206499
(71) Applicant: Mitsubishi Heavy Industries Thermal Systems, Ltd., Tokyo 108-8215 (JP)
(72) Inventor: KANIE, Tetsuo, Tokyo 108-8215 (JP); ITO, Masakazu, Tokyo 108-8215 (JP)
(74) Representative: Cabinet Beau de Loménie
(86) International application number: PCT/JP2016/074910
(87) International publication number: WO 2017/068861

(57) **Abstract**

In the present invention, even when a fan motor has been secured to an indoor unit, costs are minimized, bearing voltage is suppressed to the greatest extent possible, and the incidence of electric corrosion is lowered. A fan motor (23) has an inner bearing race for bearing a shaft (31) of a rotating body (32), an outer bearing race formed on the outer circumference of the inner bearing race, bearings positioned to have balls between the inner bearing race and the outer bearing race to rotatably support the shaft (31), and a bearing bracket (33) for covering the bearings. The fan motor (23) is provided with a first securing bracket (40) provided in the indoor unit in order to secure the fan motor (23) to the casing of the indoor unit; second fixing brackets (41) for securing the fan motor (23) to the first securing bracket (40), and sheet-shaped insulation materials (42a, 42b) positioned respectively between the bearing bracket (33) and the first securing bracket (40) and between the bearing bracket (33) and the second securing bracket (41).

## Description

### Technical Field

The present invention relates to an indoor unit, an air conditioner provided with the indoor unit, and a method for assembling the indoor unit.

### Background Art

For example, in a fan motor for an air conditioner, in order to achieve higher efficiency, inverter-drive of a DC brushless motor with a pulse width modulation (PWM) method is a mainstream, and a neutral point potential of a winding fluctuates according to a switching state, whereby a potential difference (hereinafter referred to as "shaft voltage") is generated between an outer ring and an inner ring of a bearing of a rotary shaft. The shaft voltage includes a high-frequency component due to switching control, and if the shaft voltage reaches the dielectric breakdown voltage of an oil film in the bearing, a minute current flows inside the bearing and electric corrosion occurs inside the bearing. If the electric corrosion progresses, a wavy wear phenomenon sometimes occurs in a bearing inner ring, a bearing outer ring, or bearing balls which are provided between the bearing inner ring and the bearing outer ring, thereby leading to abnormal noise, which is one of the defect factors in a fan motor.

As a method for preventing such electric corrosion, a method of making a bearing inner ring and a bearing outer ring be in a conduction state, making a bearing inner ring and a bearing outer ring be in an insulation state, or reducing shaft voltage is known.

PTL 1 below discloses a technique of controlling shaft voltage by electrically connecting an electrically conductive constituent member of an electric motor and an outer ring of a bearing on the output shaft side, or an outer ring or an outer ring conducting portion of a bearing on the anti-output shaft side by an impedance element.

PTL 2 below discloses a technique of controlling electric discharge in a bearing by electrically short-circuiting a pair of rolling bearings through a pair of vibration-proofing rubber and a pair of brackets by a pair of electric motor supporting frame bodies.

### Citation List

### Patent Literature

[PTL 1] Japanese Unexamined Patent Application Publication No. 2015-56970
[PTL 2] Japanese Patent No. 5538259

### Summary of Invention

### Technical Problem

However, as the method of making a bearing inner ring and a bearing outer ring be in a conduction state, there is a brush installation on a rotary shaft, or the like. However, abrasion powder of the brush or the space and the life thereof become problematic. Further, it is conceivable to suppress shaft voltage by short-circuiting a stator and a bearing bracket and connecting them to a ground. However, this is a method which is a mainstream in large capacity motors using a metal casing, and in small capacity motors which are used in a home or the like, there is a problem in that a cost is required for repair because a resin molded casing which is not grounded is a mainstream. Further, as the method of making an inner ring and an outer ring be in an insulation state, a ceramic ball specification bearing can also be used inside the inner and outer rings. However, there is a problem in that a cost is greatly increased.

Further, it is conceivable to short-circuit bearings on both sides or use an insulated rotor in order to reduce shaft voltage. However, such a method or the method of PTL 1 or 2 described above is a method of adjusting capacitance by balancing the impedance between a stator and a rotor, and therefore, when the fan motor is mounted on an indoor unit main body, capacitance is generated between the unit main unit or a fan motor fixing bracket and a ground, and a balance of the capacitance adjusted in the state of the fan motor single body is lost, and thus there is a problem in that the shaft voltage fluctuates and the shaft voltage increases, so that electric corrosion occurs in the bearing.

The present invention has been made in order to solve the above problem and has an object to provide an indoor unit in which even in a state where a fan motor is fixed to an indoor unit, a cost can be reduced, bearing voltage can be suppressed as much as possible, and occurrence of electric corrosion can be reduced, an air conditioner provided with the indoor unit, and a method for assembling the indoor unit.

### Solution to Problem

According to a first aspect of the present invention, there is provided an indoor unit having a motor for driving a fan, the motor including a bearing which is disposed to have a bearing inner ring supporting a rotary shaft of a rotating body, a bearing outer ring which is formed on an outer periphery of the bearing inner ring, and a rolling element between the bearing inner ring and the bearing outer ring, and rotatably supports the rotary shaft, and a bearing bracket covering the bearing, the indoor unit including; a first fixing bracket which is provided in the indoor unit in order to fix the motor to a casing of the indoor unit; a second fixing bracket for fixing the motor to the first fixing bracket; and sheet-shaped insulators which are respectively disposed between the bearing bracket and the first fixing bracket and between the bearing bracket and the second fixing bracket.

According to the first aspect of the present invention, the motor in which the bearing which is disposed to have a bearing inner ring supporting a rotary shaft of a rotating body, a bearing outer ring on the outer periphery of the bearing inner ring, and a rolling element between the bearing inner ring and the bearing outer ring is covered with the bearing bracket is fixed through the sheet-shaped insulators by the first fixing bracket which is provided in the indoor unit, and the second fixing bracket for fixing the motor to the first fixing bracket. The insulators are interposed, and therefore, even if the fixing bracket is connected, an increase in the stray capacitance (C component) of the bearing bracket portion is suppressed, and the impedance between the bearing bracket and a negative direct-current line (N) does not decrease. In this way, even if the rotary shaft of the rotating body rotates, a decrease in potential outside the bearing is suppressed, so that an increase in the shaft voltage between the bearing inner ring and the bearing outer ring (that is, both ends of the capacitance) can be suppressed. Therefore, occurrence of electric corrosion of the motor can be reduced. The sheet-shaped insulator is made of, for example, insulating resin, rubber, paper material, or the like, which is a member having a relatively small dielectric constant.

The indoor unit may further include: rubber materials each having a dielectric constant of 4 or less and respectively provided between the bearing bracket and the first fixing bracket and between the bearing bracket and the second fixing bracket.

In this way, it is possible to reduce the capacitance between the bearing bracket and a reference potential without deteriorating the vibration-proofing characteristic of the motor, and thus it is possible to further suppress the shaft voltage.

According to a second aspect of the present invention, there is provided an indoor unit having a motor for driving a fan, the motor including a bearing which is disposed to have a bearing inner ring supporting a rotary shaft of a rotating body, a bearing outer ring which is formed on an outer periphery of the bearing inner ring, and a rolling element between the bearing inner ring and the bearing outer ring, and rotatably supports the rotary shaft, and a bearing bracket covering the bearing, the indoor unit including; a first fixing bracket which is provided in the indoor unit in order to fix the motor to a casing of the indoor unit; a second fixing bracket for fixing the motor to the first fixing bracket; and rubber materials each having a dielectric constant of 4 or less and respectively provided between the bearing bracket and the first fixing bracket and between the bearing bracket and the second fixing bracket.

According to the second aspect of the present invention, the motor in which the bearing which is disposed to have a bearing inner ring supporting a rotary shaft of a rotating body, a bearing outer ring on the outer periphery of the bearing inner ring, and a rolling element between the bearing inner ring and the bearing outer ring is covered with the bearing bracket is fixed by the first fixing bracket which is provided in the indoor unit, and the second fixing bracket for fixing the motor to the first fixing bracket, and the rubber materials each having a dielectric constant of 4 or less are respectively provided between the bearing bracket and the first fixing bracket and between the bearing bracket and the second fixing bracket, whereby vibration-proofing is achieved. Even if the fixing bracket is connected, since the rubber having a small dielectric constant is interposed, an increase in the stray capacitance (C component) of the bearing bracket portion is suppressed, and the impedance between the bearing bracket and the negative direct-current line (N) does not decrease.

In this way, even if the rotary shaft of the rotating body rotates, a decrease in potential outside the bearing is suppressed and an increase in the shaft voltage between the bearing inner ring and the bearing outer ring (that is, both ends of the capacitance) can be suppressed. Therefore, occurrence of electric corrosion of the motor can be reduced.

According to a third aspect of the present invention, there is provided an air conditioner including: the indoor unit according to any one of the above aspects; and an outdoor unit which is connected to the indoor unit.

According to a fourth aspect of the present invention, there is provided a method for assembling an indoor unit having a motor which includes a bearing which is disposed to have a bearing inner ring supporting a rotary shaft of a rotating body, a bearing outer ring which is formed on an outer periphery of the bearing inner ring, and a rolling element between the bearing inner ring and the bearing outer ring, and rotatably supports the rotary shaft, and a bearing bracket covering the bearing, and drives a fan, the method including: a step of fixing the motor to a casing of the indoor unit by a first fixing bracket which is provided in the indoor unit; a step of respectively disposing sheet-shaped insulators between the bearing bracket and the first fixing bracket and between the bearing bracket and a second fixing bracket; and a step of fixing the motor to the first fixing bracket by the second fixing bracket.

According to a fifth aspect of the present invention, there is provided a method for assembling an indoor unit having a motor which includes a bearing which is disposed to have a bearing inner ring supporting a rotary shaft of a rotating body, a bearing outer ring which is formed on an outer periphery of the bearing inner ring, and a rolling element between the bearing inner ring and the bearing outer ring, and rotatably supports the rotary shaft, and a bearing bracket covering the bearing, and drives a fan, the method including: a step of fixing the motor to a casing of the indoor unit by a first fixing bracket which is provided in the indoor unit; a step of respectively disposing rubber materials each having a dielectric constant of 4 or less between the bearing bracket and the first fixing bracket and between the bearing bracket and a second fixing bracket; and a step of fixing the motor to the first fixing bracket by the second fixing bracket.

### Advantageous Effects of Invention

The present invention exhibits the effect of being able to reduce the cost, suppress bearing voltage as much as possible, and reduce occurrence of electric corrosion, even in a state where a fan motor is fixed to an indoor unit.

### Brief Description of Drawings

Fig. 1 is a schematic configuration diagram of an air conditioner according to a first embodiment of the present invention.
Fig. 2A is a front view of an indoor unit as viewed from directly below, and Fig. 2B is a front view with a decorative board on the suction side of Fig. 2A removed.
Fig. 3A is a perspective view of the indoor unit, and Fig. 3B is a perspective view with the decorative board of Fig. 3A removed.
Fig. 4 is an exploded perspective view of a region A shown in Fig. 3B.
Fig. 5 shows a longitudinal sectional view of a fan motor of the air conditioner according to the present invention.
Fig. 6 is a diagram showing, in a simulated manner, capacitance which is generated inside the motor of Fig. 5.
Fig. 7(a) shows an indoor unit/fan motor equivalent circuit in a case where the fan motor according to the present invention is incorporated in the indoor unit, and Fig. 7(b) shows a schematic diagram of the periphery of the fan motor.
Fig. 8 is an exploded perspective view of a fan motor peripheral region of an air conditioner according to a second embodiment of the present invention.

### Description of Embodiments

Hereinafter, embodiments of an indoor unit, an air conditioner provided with the indoor unit, and a method for assembling the indoor unit according to the present invention will be described with reference to the drawings.

### [First Embodiment]

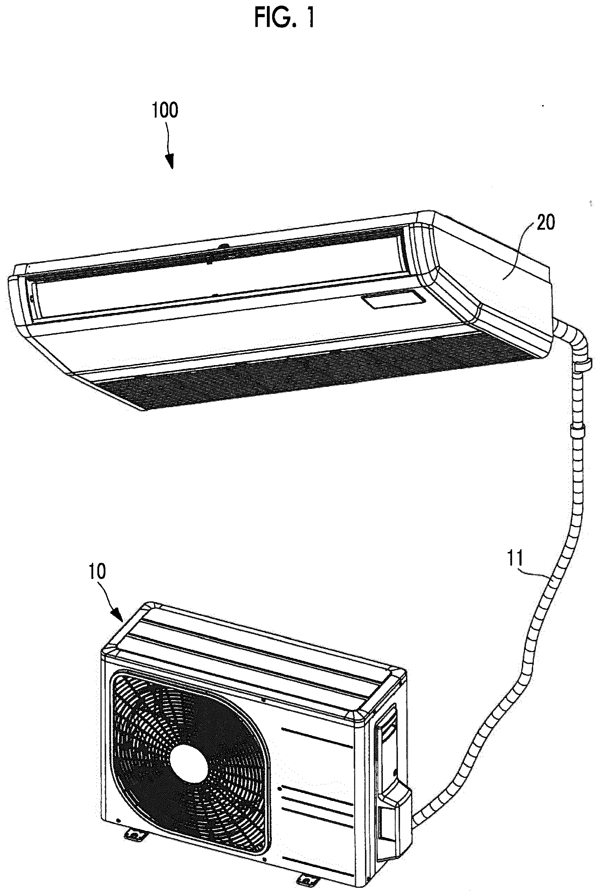

A first embodiment of the present invention will be described with reference to Figs. 1 to 7.

In Fig. 1, a schematic configuration diagram of an air conditioner 100 according to an embodiment of the present invention is shown. The air conditioner 100 includes an outdoor unit 10 and an indoor unit 20, and the outdoor unit 10 and the indoor unit 20 are connected to each other through a refrigerant pipe 11. One indoor unit 20 is shown in Fig. 1. However, this is an example, and the number of indoor units 20 which are connected to the outdoor unit 10 may be two or more.

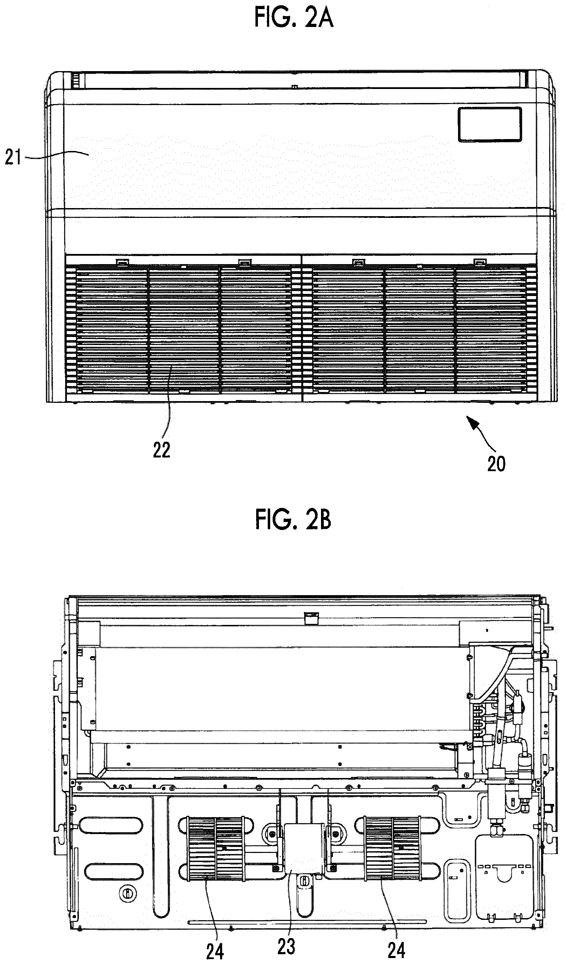

Fig. 2A shows the indoor unit 20 when the indoor unit 20 is mounted on a ceiling and looked up from directly below. Fig. 2B shows a state where a decorative board 21 mounted on the air suction port side of Fig. 2A is removed.

As shown in Fig. 2B, the indoor unit 20 is provided with a fan 24 and a fan motor (motor) 23 for driving the fan 24 at a position corresponding to a suction port 22 of the decorative board 21.

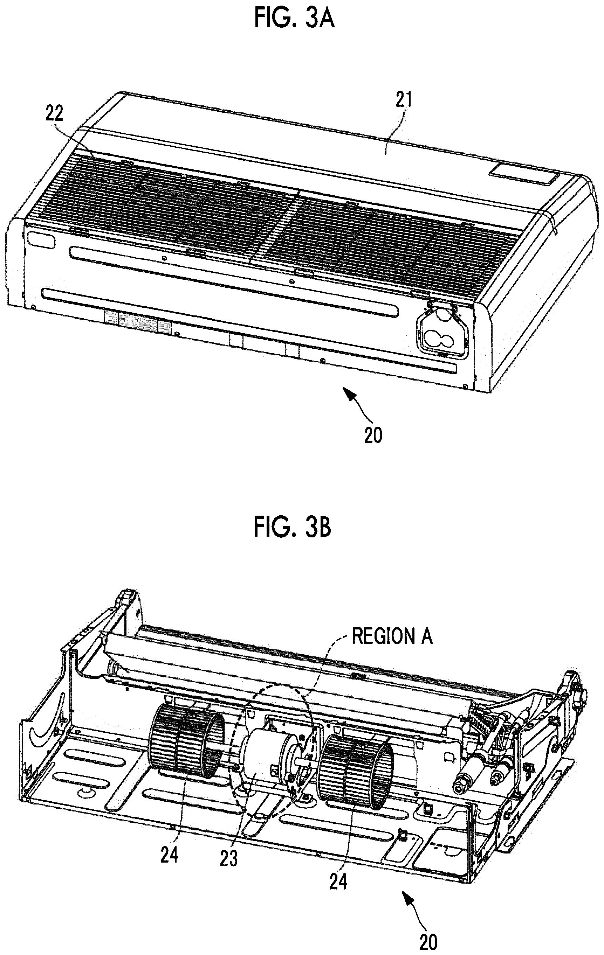

Fig. 3A shows a perspective view of the indoor unit 20 placed such that the suction port 22 becomes an upper surface (that is, the surface which is attached to the ceiling becomes a floor surface). Fig. 3B shows a state where the decorative board 21 of Fig. 3A is removed.

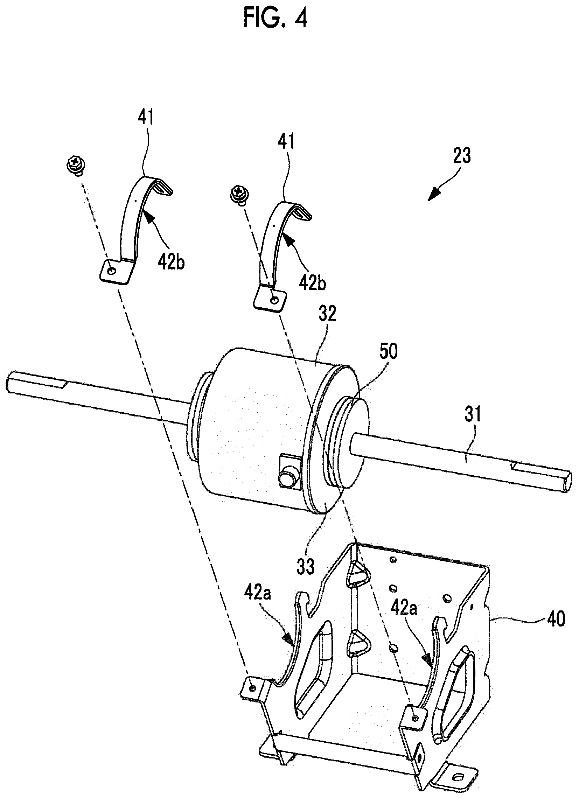

Fig. 4 is an enlarged and exploded perspective view of a region A around the fan motor shown in Fig. 3B.

As shown in Fig. 4, in the region A, the fan motor 23, a first fixing bracket 40, and a second fixing bracket 41 are provided.

The first fixing bracket 40 is a foundation (base) member which is provided on the indoor unit 20 side to fix the fan motor 23 to a casing of the indoor unit 20.

The second fixing bracket 41 is a holding member for fixing the fan motor 23 disposed on the first fixing bracket 40.

In a bearing bracket 33, a rubber insulation 50 is disposed on a surface which comes into contact with the first fixing bracket 40 and the second fixing bracket 41, and the rubber insulation 50 serves as a vibration-proofing material for the fan motor 23. The rubber insulation 50 is made of, for example, chloroprene rubber (CR) .

In a case of fixing the fan motor 23 to the casing of the indoor unit 20, sheet-shaped insulators 42a and 42b are respectively disposed between the bearing bracket 33 and the first fixing bracket 40 and between the bearing bracket 33 and the second fixing bracket 41. Specifically, the sheet-shaped insulators 42a and 42b are respectively inserted in the surface (the position indicated by an arrow in Fig. 4) coming into contact with the bearing bracket 33, of the first fixing bracket 40, and the surface (the position indicated by an arrow in Fig. 4) coming into contact with the bearing bracket 33, of the second fixing bracket 41. Each of the sheet-shaped insulators 42a and 42b is made of, for example, insulating resin, rubber, paper material, or the like, which is a member having a relatively small dielectric constant.

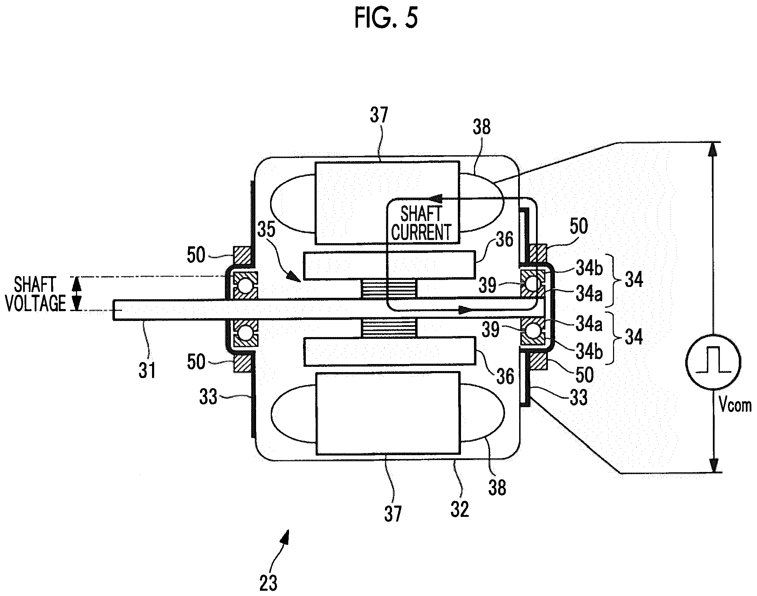

In Figs. 5 to 7, the fan motor 23 having a single shaft is exemplified. The circumstances are the same regardless of whether the fan motor 23 has a single shaft or both shafts.

Fig. 5 shows a longitudinal sectional view of the fan motor 23 having a single shaft. The fan motor 23 of this embodiment will be described by taking a DC brushless motor as an example.

The fan motor 23 is provided with a stator 37 around which a winding 38 is wound, and a rotor 35 on which a magnet 36 is mounted along an inner peripheral surface facing the outer peripheral surface of the stator 37. The fan motor 23 rotates the rotor 35 by a rotating magnetic field which is generated according to a switching state of a switching element such as a power transistor by PWM control.

Further, the fan motor 23 has a bearing 34 which is disposed to have a bearing inner ring 34a supporting a shaft (a rotary shaft) 31 of a rotating body 32, a bearing outer ring 34b which is formed on the outer periphery of the bearing inner ring 34a, and balls (rolling elements) 39 between the bearing inner ring 34a and the bearing outer ring 34b and rotatably supports the shaft 31, and the bearing bracket 33 covering the bearing 34. In this embodiment, the rolling element is exemplified as the ball. However, there is no limitation thereto.

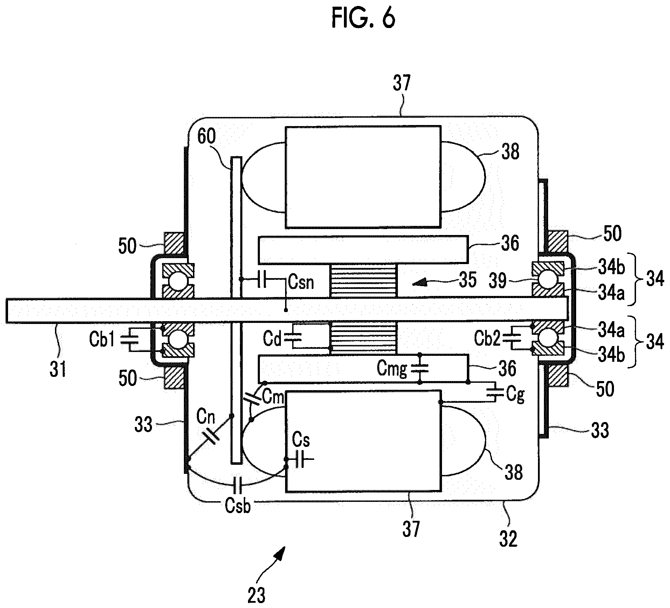

Fig. 6 shows the capacitance of the inside of the motor in a simulated manner.

Cs in Fig. 6 represents the stray capacitance between the winding and the stator, Cm represents the stray capacitance between the winding and the magnet, Cg represents the stray capacitance between the stator and the rotor, Cmg represents the stray capacitance of the magnet, Cd represents the stray capacitance of the insulated rotor, Csn represents the stray capacitance between the shaft and N, Cb1 and Cb2 represent the stray capacitance of the bearing, Csb represents the stray capacitance between the winding and the bracket, and Cn represents the stray capacitance between the bracket and the N. Further, reference numeral 60 denotes an inverter circuit board.

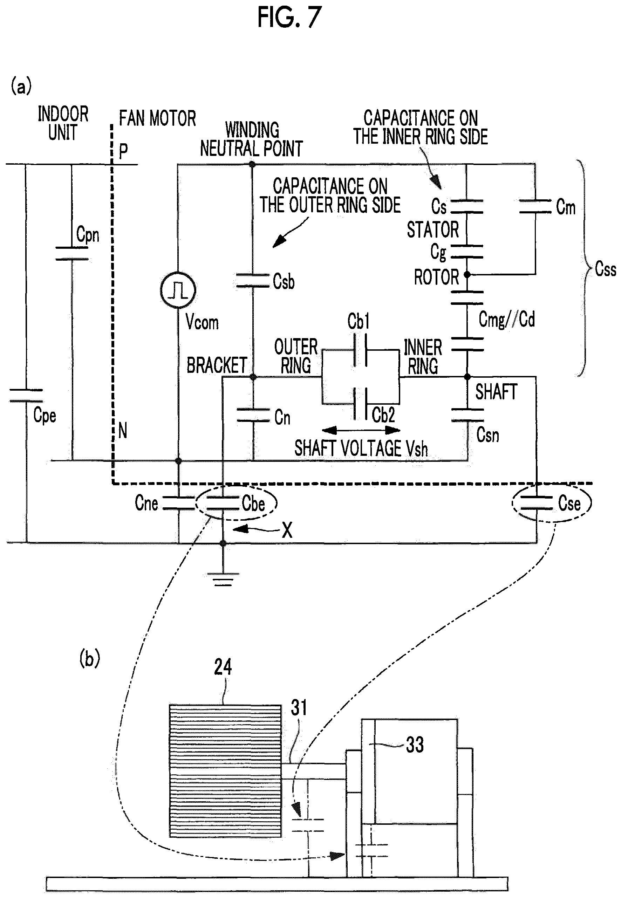

Fig. 7(a) shows an equivalent circuit in a case where the fan motor 23 is fixed to and incorporated in the indoor unit 20. With respect to the symbols shared by Fig. 6, among the symbols shown in Fig. 7(a), description thereof is omitted. Vcom represents common mode voltage (in the fan motor), Cbe represents the capacitance between the bracket and a ground, Cse represents the capacitance between the shaft and the ground, Cne represents the capacitance between the N and the ground (a Y capacitor), Cpe represents the capacitance between P and the ground (a Y capacitor), and Cpn represents the capacitance between the P and the N (a smoothing capacitor). The P represents a positive direct-current line, and the N represents a negative direct-current line.

Fig. 7(b) is a schematic diagram of the periphery of the fan motor and is a diagram for explaining a portion corresponding to Fig. 7(a). Each of the symbols Cne, Cpe, and Cpn is capacitance which is generated in an indoor board of an indoor controller (not shown) which is provided in the indoor unit 20.

As shown in Fig. 7(a), in a case where the fan motor 23 is mounted on the indoor unit 20, since the capacitance Cne and the capacitance Cbe are connected in parallel to the capacitance Cn between the bearing brackets and the N, it is estimated that the impedance between the bearing bracket and the N decreases and shaft voltage Vsh corresponding to a divided voltage of the bearing increases.

Therefore, in this embodiment, in a case where the bearing bracket 33 is fixed to the indoor unit 20, the insulators 42a and 42b are provided between the bearing bracket 33 and the portions (that is, the first fixing bracket 40 and the second fixing bracket 41) fixing the fan motor 23 to reduce the capacitance Cbe between the bearing bracket and the casing ground. Specifically, in a case where the insulators 42a and 42b are disposed at the above locations, in Fig. 7(a), it corresponds to disposing the insulators 42a and 42b at a position X between the capacitance Cbe and the ground.

Hereinafter, a method for assembling the indoor unit 20 according to this embodiment will be described.

The first fixing bracket 40 is disposed and fixed at a predetermined position of the casing of the indoor unit 20, and thus the disposition position of the fan motor 23 is determined. The sheet-shaped insulator (for example, paper material) 42a is disposed between the bearing bracket 33, and the first fixing bracket 40, the fan motor 23 is disposed on the first fixing bracket 40 with the insulator 42a disposed thereon, and the fan motor 23 is fixed at a predetermined position of the casing of the indoor unit 20. Then, the sheet-shaped insulator (for example, paper material) 42b is disposed between the bearing bracket 33 and the second fixing bracket 41, the bearing bracket 33 of the fan motor 23 is pressed down by the second fixing bracket 41, and the fan motor 23 is fixed to the first fixing bracket 40.

In a case where the sheet-shaped insulators 42a and 42b of this embodiment are not used, if the rotor 35 is rotated, a lot of stray capacitance (C components) exist in the inside of the fan motor 23 or the portion (for example, the first fixing bracket, the second fixing Brackets, or the like) fixing the fan motor 23. The voltage at a winding neutral point of the fan motor 23 fluctuates due to the switching of a high frequency (for example, about 20 [kHz]) by PWM, the common mode voltage Vcom is generated, and a path of a shaft current as indicated by the arrow in Fig. 5 is made.

Further, in a case where the sheet-shaped insulators 42a and 42b of this embodiment are not used, the shaft voltage Vsh which is a voltage between the bearing inner ring 34a and the bearing outer ring 34b increases as the divided voltage of the common mode voltage. If the shaft voltage Vsh reaches dielectric breakdown voltage which causes dielectric breakdown of a lubricating oil film of the inside of the bearing (between the bearing 34 and the ball 39), a discharge current flows inside the bearing, and electric corrosion traces are generated in the bearing 34. If a discharge phenomenon occurs over a long period of time, the electric corrosion traces grow, leading to a complaint such as abnormal noise.

Therefore, in this embodiment, the insulators 42a and 42b are respectively provided between the bearing bracket 33 and the portions (that is, the first fixing bracket 40 and the second fixing bracket 41) fixing the fan motor 23. In this manner, when the bearing bracket 33 is fixed to the casing of the indoor unit 20, by reducing the capacitance Cbe between the bearing bracket 33 and the casing ground, it is possible to prevent an increase in the shaft voltage Vsh and suppress the occurrence of electric corrosion.

As described above, according to the indoor unit 20, the air conditioner 100 provided with the indoor unit 20, and the method for assembling the indoor unit 20 of this embodiment, the fan motor 23 in which the bearing 34 which is disposed to have the bearing inner ring 34a supporting the shaft 31 of the rotating body, the bearing outer ring 34b, and the balls 39 is covered with the bearing bracket 33 is fixed through the sheet-shaped insulators 42a and 42b by the first fixing bracket 40 and the second fixing bracket 41 which are provided in the indoor unit 20.

Since the sheet-shaped insulators 42a and 42b are disposed in this manner, the shaft voltage Vsh does not increase when the fan motor 23 is assembled to the indoor unit 20, and even if the shaft 31 of the rotating body 32 rotates, since the capacitance between the bearing bracket 33 and the direct-current N line does not increase (impedance does not decrease), and thus an increase in the shaft voltage Vsh between both ends of the bearing inner ring 34a and the bearing outer ring 34b can be suppressed. In this way, the shaft voltage Vsh which has increased can be suppressed by fixing (mounting) the fan motor 23 to the indoor unit 20 such that a balance of the capacitance approaches the characteristic in the state of a motor single body, and the occurrence of electric corrosion can be reduced.

Further, suppression of the shaft voltage Vsh can be realized by a simple process of inserting the sheet-shaped insulators 42a and 42b.

### [Second Embodiment]

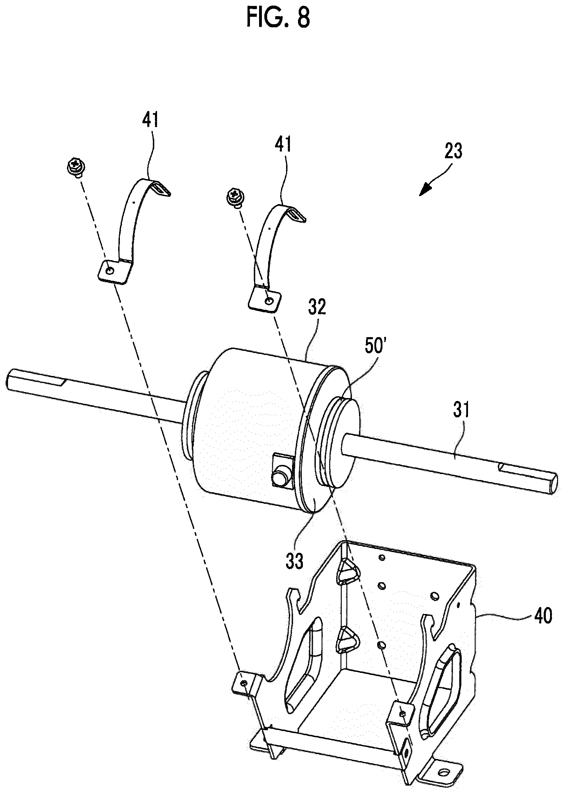

Next, a second embodiment of the present invention will be described using Fig. 8. In the first embodiment, the sheet-shaped insulator is disposed. However, in this embodiment, instead of this, a rubber insulation having a dielectric constant of 4 or less, which is provided in the bearing bracket, is used. Hereinafter, with respect to this embodiment, description of points in common with the first embodiment will be omitted, and differences will mainly be described.

In the first embodiment, CR (chloroprene rubber: dielectric constant 7.5) is used for the rubber insulation which is provided in the bearing bracket. However, in this embodiment, this material is changed.

As shown in Fig. 8, in this embodiment, rubber insulations (rubber materials) 50' each having a dielectric constant of 4 or less are respectively provided between the bearing bracket 33 and the first fixing bracket 40 and between the bearing bracket 33 and the second fixing bracket 41.

Specifically, the rubber insulation 50' having a dielectric constant of 4 or less is disposed at each of the surface coming into contact with the first fixing bracket 40, of the bearing bracket 33, and the surface coming into contact with the second fixing bracket 41, of the bearing bracket 33.

Specifically, a rubber insulation having a dielectric constant of 3.5 or less is used. The rubber insulation having a dielectric constant of 3.5 or less is made of, for example, EPDM (ethylene propylene diene rubber: dielectric constant 3.1 to 3.4).

Further, the equivalent circuit of the indoor unit/the fan motor is the same as that of Fig. 7(a) described in the first embodiment, and a case of using the rubber insulation having a dielectric constant of 4 or less corresponds to changing the magnitude of the capacitance Cbe in the equivalent circuit of the indoor unit/the fan motor of Fig. 7(a).

In this manner, by adopting the rubber insulation having a dielectric constant of 4 or less for a rubber insulation material, it is possible to suppress the shaft current and reduce the occurrence of electric corrosion of the motor without deteriorating the vibration-proofing characteristic or the like of the fan motor. Further, compared to a case where a sheet-shaped insulator is disposed as in the first embodiment, it is possible to easily deal with mass production.

The present invention is not limited to the embodiments described above and can be appropriately changed within the scope of the present invention. For example, a configuration is also acceptable in which the fan motor is fixed to the indoor unit by combining the first embodiment and the second embodiment, and in this case, since the shaft voltage can be further suppressed, the occurrence of electric corrosion of the motor can be more reliably reduced.

10: outdoor unit
20: indoor unit
23: motor
31: rotary shaft
32: rotating body
33: bearing bracket
34a: bearing inner ring
34b: bearing outer ring
34: bearing
39: ball (rolling element)
40: first fixing bracket
41: second fixing bracket
42a, 42b: sheet-shaped insulator
50, 50': rubber insulation (rubber material)
100: air conditioner

## Claims

1. An indoor unit having a motor for driving a fan,
the motor including
a bearing which is disposed to have a bearing inner ring supporting a rotary shaft of a rotating body, a bearing outer ring which is formed on an outer periphery of the bearing inner ring, and a rolling element between the bearing inner ring and the bearing outer ring, and rotatably supports the rotary shaft, and
a bearing bracket covering the bearing,
the indoor unit comprising:
a first fixing bracket which is provided in the indoor unit in order to fix the motor to a casing of the indoor unit;
a second fixing bracket for fixing the motor to the first fixing bracket; and
sheet-shaped insulators which are respectively disposed between the bearing bracket and the first fixing bracket and between the bearing bracket and the second fixing bracket.

2. The indoor unit according to claim 1, further comprising:
rubber materials each having a dielectric constant of 4 or less and respectively provided between the bearing bracket and the first fixing bracket and between the bearing bracket and the second fixing bracket.

3. An indoor unit having a motor for driving a fan,
the motor including
a bearing which is disposed to have a bearing inner ring supporting a rotary shaft of a rotating body, a bearing outer ring which is formed on an outer periphery of the bearing inner ring, and a rolling element between the bearing inner ring and the bearing outer ring, and rotatably supports the rotary shaft, and
a bearing bracket covering the bearing,
the indoor unit comprising:
a first fixing bracket which is provided in the indoor unit in order to fix the motor to a casing of the indoor unit;
a second fixing bracket for fixing the motor to the first fixing bracket; and
rubber materials each having a dielectric constant of 4 or less and respectively provided between the bearing bracket and the first fixing bracket and between the bearing bracket and the second fixing bracket.

4. An air conditioner comprising:
the indoor unit according to any one of claims 1 to 3; and
an outdoor unit which is connected to the indoor unit.

5. A method for assembling an indoor unit having a motor which includes a bearing which is disposed to have a bearing inner ring supporting a rotary shaft of a rotating body, a bearing outer ring which is formed on an outer periphery of the bearing inner ring, and a rolling element between the bearing inner ring and the bearing outer ring, and rotatably supports the rotary shaft, and a bearing bracket covering the bearing, and drives a fan, the method comprising:
a step of fixing the motor to a casing of the indoor unit by a first fixing bracket which is provided in the indoor unit;
a step of respectively disposing sheet-shaped insulators between the bearing bracket and the first fixing bracket and between the bearing bracket and a second fixing bracket; and
a step of fixing the motor to the first fixing bracket by the second fixing bracket.

6. A method for assembling an indoor unit having a motor which includes a bearing which is disposed to have a bearing inner ring supporting a rotary shaft of a rotating body, a bearing outer ring which is formed on an outer periphery of the bearing inner ring, and a rolling element between the bearing inner ring and the bearing outer ring, and rotatably supports the rotary shaft, and a bearing bracket covering the bearing, and drives a fan, the method comprising:
a step of fixing the motor to a casing of the indoor unit by a first fixing bracket which is provided in the indoor unit;
a step of respectively disposing rubber materials each having a dielectric constant of 4 or less between the bearing bracket and the first fixing bracket and between the bearing bracket and a second fixing bracket; and
a step of fixing the motor to the first fixing bracket by the second fixing bracket.

## Amended claims

### Amended claims under Art. 19.1 PCT

**1.** (Amended) An indoor unit having a motor for driving a fan,
the motor including
a bearing which is disposed to have a bearing inner ring supporting a rotary shaft of a rotating body, a bearing outer ring which is formed on an outer periphery of the bearing inner ring, and a rolling element between the bearing inner ring and the bearing outer ring, and rotatably supports the rotary shaft, and
a bearing bracket covering the bearing and provided with a rubber insulation,
the indoor unit comprising;
a first fixing bracket which is provided in the indoor unit in order to fix the motor to a casing of the indoor unit;
a second fixing bracket for fixing the motor to the first fixing bracket; and
sheet-shaped insulators which are respectively disposed between the rubber insulation provided in the bearing bracket and the first fixing bracket and between the rubber insulation provided in the bearing bracket and the second fixing bracket.

**2.** The indoor unit according to claim 1, further comprising:
rubber materials each having a dielectric constant of 4 or less and respectively provided between the bearing bracket and the first fixing bracket and between the bearing bracket and the second fixing bracket.

**3.** An indoor unit having a motor for driving a fan,
the motor including
a bearing which is disposed to have a bearing inner ring supporting a rotary shaft of a rotating body, a bearing outer ring which is formed on an outer periphery of the bearing inner ring, and a rolling element between the bearing inner ring and the bearing outer ring, and rotatably supports the rotary shaft, and
a bearing bracket covering the bearing
the indoor unit comprising;
a first fixing bracket which is provided in the indoor unit in order to fix the motor to a casing of the indoor unit;
a second fixing bracket for fixing the motor to the first fixing bracket; and
rubber materials each having a dielectric constant of 4 or less and respectively provided between the bearing bracket and the first fixing bracket and between the bearing bracket and the second fixing bracket.

**4.** An air conditioner comprising:
the indoor unit according to any one of claims 1 to 3; and
an outdoor unit which is connected to the indoor unit.

**5.** (Amended) A method for assembling an indoor unit having a motor which includes a bearing which is disposed to have a bearing inner ring supporting a rotary shaft of a rotating body, a bearing outer ring which is formed on an outer periphery of the bearing inner ring, and a rolling element between the bearing inner ring and the bearing outer ring, and rotatably supports the rotary shaft, and a bearing bracket covering the bearing and provided with a rubber insulation, and drives a fan, the method comprising:
a step of fixing the motor to a casing of the indoor unit by a first fixing bracket which is provided in the indoor unit;
a step of respectively disposing sheet-shaped insulators between the rubber insulation provided in the bearing bracket and the first fixing bracket and between the rubber insulation provided in the bearing bracket and a second fixing bracket; and
a step of fixing the motor to the first fixing bracket by the second fixing bracket.

**6.** A method for assembling an indoor unit having a motor which includes a bearing which is disposed to have a bearing inner ring supporting a rotary shaft of a rotating body, a bearing outer ring which is formed on an outer periphery of the bearing inner ring, and a rolling element between the bearing inner ring and the bearing outer ring, and rotatably supports the rotary shaft, and a bearing bracket covering the bearing, and drives a fan, the method comprising:
a step of fixing the motor to a casing of the indoor unit by a first fixing bracket which is provided in the indoor unit;
a step of respectively disposing rubber materials each having a dielectric constant of 4 or less between the bearing bracket and the first fixing bracket and between the bearing bracket and a second fixing bracket; and
a step of fixing the motor to the first fixing bracket by the second fixing bracket.
